# EUROPÄISCHE PATENTSCHRIFT

(11) **EP 1 017 476 B1**
(45) Veröffentlichungstag und Bekanntmachung des Hinweises auf die Patenterteilung: **18.10.2006**
(21) Anmeldenummer: 99920554.5
(22) Anmeldetag: 20.03.1999
(51) Int. Cl.: B01D 53/22, B01D 35/06, H01M 8/10, B01D 71/02, B01D 53/32

(54) **IONENLEITENDER, STOFFDURCHLÄSSIGER VERBUNDWERKSTOFF, VERFAHREN ZU DESSEN HERSTELLUNG UND DIE VERWENDUNG DES VERBUNDWERKSTOFFES**
ION-CONDUCTING COMPOSITE WHICH IS PERMEABLE TO MATTER, METHOD FOR PRODUCING SAID COMPOSITE, AND USE OF THE SAME
MATERIAU COMPOSITE CONDUCTEUR D'IONS PERMEABLE AUX SUBSTANCES, PROCEDE PERMETTANT DE LE PRODUIRE ET SON UTILISATION

(30) Priorität: 03.06.1998 DE 19824666
(43) Veröffentlichungstag der Anmeldung: 12.07.2000
(73) Patentinhaber: Degussa AG, 40474 Düsseldorf (DE)
(72) Erfinder: HYING, Christian, D-46414 Rhede (DE); HÖRPEL, Gerhard, D-48301 Nottuln (DE); PENTH, Bernd, D-66822 Lebach (DE)
(86) Internationale Anmeldenummer: PCT/DE1999/000875
(87) Internationale Veröffentlichungsnummer: WO 1999/062620

(56) Entgegenhaltungen:
- WO-A-96/00198
- US-A- 4 208 475
- US-A- 4 244 986
- US-A- 5 232 681
- US-A- 5 376 442

## Beschreibung

Die vorliegende Erfindung betrifft einen stoffdurchlässigen Verbundwerkstoff, der ionenleitende Eigenschaften aufweist.

Ionenleitende Werkstoffe werden nach dem Stand der Technik in sehr großem Umfang in der Technik eingesetzt und für die verschiedensten Anwendungen genutzt. Hier wären vor allem die Anwendungen in der Elektrodialyse als Anionen- bzw. Kationentauschermembranen zu nennen aber auch die Anwendung als Diaphragma in Elektrolyse- oder Membranelektrolysezellensowie sowie als Membran in Pervaporationsmodulen. Weitere Anwendungsfelder liegen im Bereich der Energiegewinnung mit Brennstoffzellen. Es gibt aber auch eine ganze Reihe von elektrochemischen oder katalysierten Reaktionen die an ionenleitenden Werkstoffen ablaufen, bzw. von diesen katalysiert werden.

Zur Zeit werden für diese Anwendungen überwiegend Polymermaterialien eingesetzt, die ionische Gruppen tragen. Hier wären vor allem die modifizierten Polysulfone, Polyethersulfone, Polystyrole und modifiziertes Polyvinylidenfluorid bzw. Polytetrafluorethylen zu nennen. Diese Materialien sind für die meisten Anwendungen in Ihren Leistungen vollkommen ausreichend. Allerdings sind diese Polymere im Temperaturbereich in dem sie verwendet werden können eingeschränkt. So findet ab einer Temperatur von ca. 120 °C entweder eine Erweichung des Materials statt, oder aber die Materialien sind dann nicht mehr ausreichend quellfähig, um eine gute Ionenleitung zu gewährleisten.

Anorganische Materialien wie Zeolithe oder andere Alumosilicate zeichnen sich zwar durch eine bessere Temperaturstabilität aus, sind aber häufig in sauren Medien nicht ausreichend stabil, so daß eine langsame Zersetzung der Materialien während des Betriebes stattfindet. Daher haben sie auch nur in einem begrenzten Bereich ihre Anwendungsfelder, wie zum Beispiel in der Natriumsulfid-Schwefel-Zelle (Energiespeicherung) oder in einigen Elektrolyseapparaturen.

PCT/EP98/05939 beschreibt einen stoffdurchlässigen Verbundwerkstoff und ein Verfahren zu dessen Herstellung. Dieser stoffdurchlässige Verbundwerkstoff zeichnet sich durch eine hohe Temperaturstabilität aus, weist jedoch keine ionenleitenden Eigenschaften auf.

US 4,244,986 beschreibt die Herstellung eines ionenleitfähigen keramischen Materials mit β-Alumina, das als dünner Film aus einem Sol auf ein Substrat abgeschieden und bei 1200 °C verfestigt wird. Dieser β-Alumina Film ist ab einer Temperatur von 300 °C für Natriumionen leitfähig und kann als fester Elektrolyt in Natriumsulfid-Schwefel-Batterien eingesetzt werden.

US 5,232,681 beschreibt die Herstellung stabiler, pulverförmiger Natrium-β-Aluminiumoxide, ausgehend von verschiedenen AI-Übergangsoxiden oder -Hydroxiden. Mit Hilfe löslicher Verbindungen der Metalle Mg, Li, Zn, Co, Ni, oder Fe wird die Kristallisationsphase des Natrium-β-Aluminiumoxide stabilisiert und durch die Zugabe löslicher, zum Beispiel organometallischer Dotierungsmittel Natriumionen-leitfähig gemacht. Das Pulver läßt sich zu einem Schlicker verarbeiten, der sprüh-, gefrier- oder Wirbelschichtgetrocknet, oder bei einer Temperatur von 1650 °C versintert werden kann.

Weder US 4,244,986, noch US 5,232,681 sagen etwas über die Natriumionenleitfähigkeit bei niedrigeren Temperaturen oder über die Leitfähigkeit anderer Ionenarten etwas aus.

In US 5,376,442 wird ein poröser, keramischer Verbundwerkstoff offenbart, der aus einem Vlies oder Stahlgewebe besteht, das zusammen mit verschiedenen Bindern, zum Beispiel Polyvinyl-Alkohol oder Methylcellulose, mit Aluminiumoxidhydrat-Sol beschichtet wird. Durch Hinzufügen von Titanoxid-Sol oder eines elektrischen Leiters in Pulverform wird diese Beschichtung elektrisch leitfähig.

In WO 96/00198 wird die Herstellung keramischer Schichten aus sauren hydrolysierten Metallverbindungen auf diversen Substraten beschrieben, die unter anderem als Gassensoren verwendet werden können. Gassensoren nutzen die Potentiometrie für die Messung von Gaskonzentrationen, bei der definierte, hohe ohmsche Widerstände und Temperaturen zwischen 400 und 800 °C erforderlich sind.

Ziel der vorliegenden Erfindung war es ein auch bei Temperaturen von bis zu 250°C noch gut ionenleitendes Material zu finden, daß gleichzeitig unempfindlich gegenüber höheren Säurekonzentrationen ist.

Überraschenderweise wurde gefunden, daß ein stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, unter Beibehaltung seiner guten Temperaturstabilität und Stabilität gegenüber Säuren, mit ionenleitende Eigenschaften ausgerüstet werden kann.

Gegenstand der vorliegenden Erfindung ist deshalb ein stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, ausgewählt aus den Oxiden der Elemente Sc, Y, Zr, Nb, Ce, V, Cr, Mo, W, Mn, Fe, Co, B, Al, In, Tl, Si, Ge, Sn, Pb und Bi, dadurch hergestellt, dass in und auf zumindest einen durchbrochenen und stoffdurchlässigen Träger zumindest eine Suspension gebracht wird, die zumindest eine anorganische Komponente aus zumindest einer Verbindung zumindest eines Metalls, eines Halbmetalls oder eines Mischmetalls mit zumindest einem der Elemente der 3. bis 7. Hauptgruppe aufweist und die Suspension durch zumindest einmaliges Erwärmen auf oder im oder auf und im Trägermaterial verfestigt wird, dadurch gekennzeichnet, dass im Gefüge des Verbundwerkstoffes zumindest ein anorganisches und/oder organisches Material, das ionenleitende Eigenschaften aufweist, als Beimischung enthalten ist, und die inneren und/oder äußeren Oberflächen der im Verbundwerkstoff vorhandenen Partikel mit einer Schicht aus einem anorganischen und/oder anorganischen Material überzogen sind, oder in den Zwischenkornvolumen des Verbundwerkstoffes zumindest ein anorganisches und/oder organisches Material, welches ionenleitende Eigenschaften aufweist, vorhanden ist, und das ionenleitende Eigenschaften aufweisende Material ionische Gruppen aus der Gruppe der Sulfonsäure-, Phosphonsäure-, Carbonsäure-, tetra-Organylammonium-, tetra-Organylphosphoniumgruppen oder Gemische dieser Gruppen aufweist, oder das organische ionenleitende Material zumindest ein Polymer, ausgewählt aus sulfoniertem Polytetrafluorethylen, sulfoniertem Polyvinylidenfluorid, aminolysiertem Polytetrafluorethylen, aminolysiertem Polyvinylidenfluorid, sulfoniertem Polysulfon, aminolysiertes Polysulfon, sulfoniertem Polyetherimid, ein aminolysiertem Polyetherimid oder ein Gemisch aus diesen ist,
oder zumindest eine Verbindung aus der Gruppe der Oxide, Phosphate, Phosphonate, Sulfate, Titanate, Silikate, Alumosilikate oder Gemische dieser Verbindungen zumindest des Elementes Zr order ein Gemisch von Zr und Li ist, und der Verbundwerkstoff bei einer Temperatur von -40 °C bis 200 °C ionenleitend ist.

Ebenfalls Gegenstand der vorliegenden Erfindung ist ein Verfahren zur Herstellung eines Verbundwerkstoffes gemäß zumindest einem der Ansprüche 1 bis 10 auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, das dadurch gekennzeichnet ist, dass in und auf zumindest einen durchbrochenen und stoffdurchlässigen Träger, zumindest eine Suspension gebracht wird, die zumindest eine anorganische Komponente, aus zumindest einer Verbindung zumindest eines Metalls, eines Halbmetalls oder eines Mischmetalls mit zumindest einem der Elemente der 3. bis 7. Hauptgruppe, aufweist und durch zumindest einmaliges Erwärmen die Suspension auf und im Trägermaterial verfestigt wird, und der ionenleitende Verbundwerkstoff durch Einsatz eines Sols, welches zumindest ein ionenleitendes Material oder zumindest ein Material aufweist, welches nach einer weiteren Behandlung ionenleitende Eigenschaften aufweist, bei der Herstellung des Verbundwerkstoffes erhalten wird.

Auch ist Gegenstand der vorliegenden Erfindung die Verwendung eines Verbundwerkstoffes gemäß zumindest einem der Ansprüche 1 bis 10 als Katalysator für sauer oder basisch katalysierten Reaktionen.

Der erfindungsgemäße ionenleitende Verbundwerkstoff zeichnet sich durch gute ionenleitende Eigenschaften aus. Entgegen der allgemeinen Annahme, daß gut ionenleitende Materialien porenfrei sein müssen, wurde gefunden, daß gut ionenleitfähige Materialien nicht absolut porenfrei sein müssen, sondern daß die Porengröße nur einen bestimmten Grenzwert unterschreiten muß. Sind die Oberflächen der Poren mit ionogenen Gruppen ausgestattet, so findet eine Ionenleitung in Form eines Oberflächendiffusionsmechanismus statt. Dieser Mechanismus der Ionenwanderung führt, eine recht hohe Porösität vorausgesetzt, zu hohen Ionenflüssen durch das Material, so daß Stromdichten von mehr als 50 mA cm⁻² erreicht werden können.

Für den Einsatz von Membranen in der Elektrodialyse oder als protonenleitende Membran in Brennstoffzellen ist nicht nur eine gute Leitfähigkeit, sondern auch eine möglichst hohe Permselektivität notwendig. Auch diese Voraussetzung erfüllt der erfindungsgemäße Verbundwerkstoff gut. Die Permselektivitäten der als Membranmaterialien eingesetzten erfindungsgemäßen ionenleitenden Verbundwerkstoffe liegt je nach verwendetem Material im Bereich von 0,75 bis 0,98.

Der erfindungsgemäße Verbundwerkstoff wird im folgenden beispielhaft beschrieben, ohne darauf beschränkt zu sein.

Der erfindungsgemäße stoffdurchlässige Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, weist ionenleitende Eigenschaften auf. Unter dem Inneren eines Trägers werden in der vorliegenden Erfindung Hohlräume oder Poren in einem Träger verstanden.

Erfindungsgemäß kann der durchbrochene und stoffdurchlässige Träger Zwischenräume mit einer Größe von 0,02 bis 500 µm aufweisen. Die Zwischenräume können Poren, Maschen, Löcher, Kristallgitterzwischenräume oder Hohlräume sein. Der Träger kann zumindest ein Material, ausgewählt aus Kohlenstoff, Metallen, Legierungen, Glas, Keramiken, Mineralien, Kunststoffen, amorphen Substanzen, Naturprodukten, Verbundstoffen oder aus zumindest einer Kombination dieser Materialien, aufweisen. Die Träger, welche die vorgenannten Materialien aufweisen können, können durch eine chemische, thermische oder einer mechanischen Behandlungsmethode oder einer Kombination der Behandlungsmethoden modifiziert worden sein. Vorzugsweise weist der Verbundwerkstoff einen Träger, der zumindest ein Metall, eine Naturfaser oder einen Kunststoff aufweist auf, der nach zumindest einer mechanischen Verformungstechnik bzw. Behandlungsmethode, wie z.B. Ziehen, Stauchen, Walken, Walzen, Recken oder Schmieden modifiziert wurde. Ganz besonders bevorzugt weist der Verbundwerkstoff zumindest einen Träger, der zumindest verwobene, verklebte, verfilzte oder keramisch gebundene Fasern, oder zumindest gesinterte oder verklebte Formkörper, Kugeln oder Partikel aufweist, auf. In einer weiteren bevorzugten Ausführung kann ein perforierter Träger verwendet werden. Stoffdurchlässige Träger können auch solche sein, die durch Laserbehandlung oder Ionenstrahlbehandlung stoffdurchlässig werden oder gemacht worden sind.

Es kann vorteilhaft sein, wenn der Träger Fasern aus zumindest einem Material, ausgewählt aus Kohlenstoff, Metallen, Legierungen, Keramiken, Glas, Mineralien, Kunststoffen, amorphen Substanzen, Verbundstoffen und Naturprodukten oder Fasern aus zumindest einer Kombination dieser Materialien, wie z.B. Asbest, Glasfasern, Kohlefasern, Metalldrähte, Stahldrähte, Steinwollfasern, Polyamidfasern, Kokosfasern, beschichtete Fasern, aufweist. Vorzugsweise werden Träger verwendet, die verwobene Fasern aus Metall oder Legierungen aufweist. Als Fasern aus Metall können auch Drähte dienen. Ganz besonders bevorzugt weist der Verbundwerkstoff einen Träger auf, der zumindest ein Gewebe aus Stahl oder Edelstahl, wie z.B. aus Stahldrähten, Stahlfasern, Edelstahldrähten oder Edelstahlfasern durch Weben hergestellte Gewebe, aufweist, welches vorzugsweise Maschenweite von 5 bis 500 µm, besonders bevorzugt Maschenweiten von 50 bis 500 µm und ganz besonders bevorzugt Maschenweiten von 70 bis 120 µm, aufweist.

Der Träger des Verbundwerkstoffes kann aber auch zumindest ein Streckmetall mit einer Porengröße von 5 bis 500 µm aufweisen. Erfindungsgemäß kann der Träger aber auch zumindest ein körniges, gesintertes Metall, ein gesintertes Glas oder ein Metallvlies mit einer Porenweite von 0,1 µm bis 500 µm, vorzugsweise von 3 bis 60 µm, aufweisen.

Der erfindungsgemäße Verbundwerkstoff weist vorzugsweise zumindest einen Träger auf, der zumindest Aluminium, Silicium, Cobalt, Mangan, Zink, Vanadium, Molybdän, Indium, Blei, Wismuth, Silber, Gold, Nickel, Kupfer, Eisen, Titan, Platin, Edelstahl, Stahl, Messing, eine Legierung aus diesen Materialien oder ein mit Au, Ag, Pb, Ti, Ni, Cr, Pt, Pd, Rh, Ru und/oder Ti beschichtetes Material aufweist.

Die im erfindungsgemäßen Verbundwerkstoff vorhandene anorganische Komponente weist zumindest eine Verbindung aus zumindest einem Metall, Halbmetall oder Mischmetall mit zumindest einem Element der 3. bis 7. Hauptgruppe des Periodensystems oder zumindest eine Mischung dieser Verbindungen auf. Dabei können die Verbindungen der Metalle, Halbmetalle oder Mischmetalle zumindest Elemente der Nebengruppenelemente und der 3. bis 5. Hauptgruppe oder zumindest Elemente der Nebengruppenelemente oder der 3. bis 5. Hauptgruppe aufweisen, wobei diese Verbindungen eine Korngröße von 0,001 bis 25 µm aufweisen. Vorzugsweise weist die anorganische Komponente zumindest eine Verbindung eines Elementes der 3. bis 8. Nebengruppe oder zumindest eines Elementes der 3. bis 5. Hauptgruppe mit O oder zumindest eine Verbindung eines Elementes der 3. bis 8. Nebengruppe und zumindest eines Elementes der 3. bis 5. Hauptgruppe mit O oder eine Mischung dieser Verbindungen auf. Die anorganische Komponente weist zumindest eine Verbindung zumindest eines der Elemente Sc, Y, Zr, V, Nb, Cr, Mo, W, Mn, Fe, Co, B, Al, In, Tl, Si, Ge, Sn, Pb oder Bi mit O auf. Die anorganische Komponente kann auch Alumosilicate, Aluminiumphospate, Zeolithe oder partiell ausgetauschte Zeolithe, wie z.B. ZSM-5, Na-ZSM-5 oder Fe-ZSM-5 oder amorphe mikroporöse Mischoxide, die bis zu 20 % nicht hydrolisierbare organische Verbindungen enthalten können, wie z.B. Vanadinoxid-Siliziumoxid-Glas oder Aluminiumoxid-Siliciumoxid-Methylsiliciumsesquioxid-Gläser, aufweisen.

Vorzugsweise liegt zumindest eine anorganische Komponente in einer Komgrößenfraktion mit einer Korngröße von 1 bis 250 nm oder mit einer Korngröße von 260 bis 10.000 nm vor.

Es kann vorteilhaft sein, wenn der erfindungsgemäße Verbundwerkstoff zumindest zwei Komgrößenfraktionen zumindest einer anorganischen Komponente aufweist. Ebenso kann es vorteilhaft sein, wenn der erfindungsgemäße Verbundwerkstoff zumindest zwei Komgrößenfraktionen von zumindest zwei anorganischen Komponenten aufweist. Das Komgrößenverhältnis kann von 1 : 1 bis 1 : 10.000, vorzugsweise von 1 : 1 bis 1 : 100 betragen. Das Mengenverhältnis der Korngrößenfraktionen im Verbundwerkstoff kann vorzugsweise von 0,01 : 1 bis 1 : 0,01 betragen.

Die Stoffdurchlässigkeit des erfindungsgemäßen Verbundwerkstoffes wird durch die Korngröße der verwendeten zumindest einen anorganischen Komponente auf Teilchen mit einer bestimmten maximalen Größe begrenzt.

Der erfindungsgemäße Verbundwerkstoff zeichnet sich dadurch aus, daß er ionenleitende Eigenschaften besitzt und dass er bei einer Temperatur von -40 °C bis 200 °C ionenleitend ist.

Der Verbundwerkstoff weist zumindest ein anorganisches und/oder organisches Material auf, das ionenleitende Eigenschaften aufweist. Dieses Material ist als Beimischung im Gefüge des Verbundwerkstoffes enthalten, und die inneren und/oder äußeren Oberflächen der im Verbundwerkstoff vorhandenen Partikel sind mit einer Schicht aus einem anorganischen und/oder anorganischen Material überzogen, wobei solche Schichten eine Dicke von 0,0001 bis 1 µm, vorzugsweise eine Dicke von 0,001 bis 0,05 µm, aufweisen, oder es ist zumindest ein anorganisches und/oder organisches Material, welches ionenleitende Eigenschaften aufweist, in den Zwischenkornvolumen des Verbundwerkstoffes vorhanden. Dieses Material füllt das Zwischenkornvolumen ganz oder teilweise, vorzugsweise ganz aus. Im besonderen füllt zumindest ein anorganisches und/oder organisches Material, welches ionenleitende Eigenschaften aufweist, die Zwischenräume des Verbundwerkstoffes aus.

Das ionenleitende Eigenschaften aufweisende Material weist ionische Gruppen aus der Gruppe der Sulfonsäure-, Carbonsäure-, tetra-Organylammonium-, tetra-Organylphosphoniumgruppen oder Gemische dieser Gruppen gleicher Ladung auf, oder ist ein Polymer, ausgewählt aus sulfoniertem Polytetrafluorethylen, sulfoniertem Polyvinylidenfluorid, aminolysiertem Polytetrafluorethylen, aminolysiertem Polyvinylidenfluorid, sulfoniertem Polysulfon, aminolysiertem Polysulfon, sulfoniertem Polyetherimid, aminolysiertem Polyetherimid oder ein Gemisch aus diesen Polymeren, oder ist zumindest eine Verbindung aus der Gruppe der Oxide, Phosphate, Phosphonate, Sulfate, Titanate, Silikate, Alumosilikate oder Gemische dieser Verbindungen zumindest des Elementes Zr, oder eines Gemisches von Zr und Li.

Diese ionischen Gruppen können chemisch und/oder physikalisch an anorganische Partikel gebundene organische Verbindungen sein, oder die ionischen Gruppen über Aryl- und/oder Alkylketten mit der inneren und/oder äußeren Oberfläche der im Verbundwerkstoff vorhandenen Partikel verbunden sein.

Als anorganische ionenleitende Materialien kann aber auch zumindest eine teilhydrolysierte Verbindung aus der Gruppe der Oxide, Phosphate, Phosphite, Phosphonate, Sulfate, Sulfonate, Vanadate, Stannate, Plumbate, Chromate, Wolframate, Molybdate, Manganate, Titanate, Silikate, Alumosilikate und Aluminate oder Gemische dieser Verbindungen zumindest eines der Elemente Al, K, Na, Ti, Fe, Zr, Y, Va, W, Mo, Ca, Mg, Li, Cr, Mn, Co, Ni, Cu oder Zn oder ein Gemisch dieser Elemente vorhanden sein. Vorzugsweise ist als anorganisches ionenleitendes Material zumindest eine amorphe und/oder kristalline Verbindung zumindest eines der Elemente Zr, Si, Ti, Al, Y oder Vanadium oder teilweise nicht hydrolysierbare Gruppen tragende Siliziumverbindungen, oder Gemische dieser Elemente oder Verbindungen, im erfindungsgemäßen ionenleitenden Verbundwerkstoff vorhanden.

Der erfindungsgemäße ionenleitende Verbundwerkstoff kann flexibel sein. Vorzugsweise ist der ionenleitende Verbundwerkstoff bis zu einem kleinsten Radius von 1 mm biegbar.

Das erfindungsgemäße Verfahren zur Herstellung eines ionenleitenden Verbundwerkstoffes wird im folgenden beispielhaft beschrieben, ohne daß das erfindungsgemäße Verfahren auf diese Herstellung beschränkt sein soll.

Die ionenleitenden, stoffdurchlässigen Verbundwerkstoffe können auf verschiedenen Wegen hergestellt werden. Zum einen können bei der Herstellung eines Verbundwerkstoffes ionenleitende Materialien oder Materialien, die nach einer weiteren Behandlung ionenleitende Eigenschaften aufweisen, eingesetzt werden. Zum anderen können schon vorhandene stoffdurchlässige Verbundwerkstoffe mit ionenleitenden Materialien oder mit Materialien, die nach einer weiteren Behandlung ionenleitende Eigenschaften aufweisen, behandelt werden.

Das erfindungsgemäße Verfahren zur Herstellung eines Verbundwerkstoffes, der ionenleitende Eigenschaften aufweist, bedient sich eines Verfahrens zur Herstellung eines Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist. Dieses Herstellungsverfahren wird in PCT/EP98/05939 ausführlich beschrieben.

Bei diesem Verfahren zur Herstellung des Verbundwerkstoffes wird in und auf zumindest einen durchbrochenen und stoffdurchlässigen Träger, zumindest eine Suspension gebracht, die zumindest eine anorganische Komponente, aus zumindest einer Verbindung zumindest eines Metalls, eines Halbmetalls oder eines Mischmetalls mit zumindest einem der Elemente der 3. bis 7. Hauptgruppe, aufweist und durch zumindest einmaliges Erwärmen wird die Suspension auf und im Trägermaterial verfestigt.

Bei diesem Verfahren kann es vorteilhaft sein, die Suspension auf und in oder aber auf oder in zumindest einen Träger durch Aufdrucken, Aufpressen, Einpressen Aufrollen, Aufrakeln, Aufstreichen, Tauchen, Spritzen oder Aufgießen zu bringen.

Der durchbrochene und stoffdurchlässige Träger, auf den und in den zumindest eine Suspension gebracht wird, kann zumindest ein Material, ausgewählt aus Kohlenstoff, Metallen, Legierungen, Keramiken, Mineralien, Kunststoffen, amorphen Substanzen, Naturprodukten, Verbundstoffen, Verbundwerkstoffen oder aus zumindest einer Kombination dieser Materialien aufweisen. Als stoffdurchlässige Träger können auch solche verwendet werden, die durch Behandlung mit Laserstrahlen oder Ionenstrahlen stoffdurchlässig gemacht wurden. Vorzugsweise werden als Träger Gewebe aus Fasern oder Drähten der oben angegeben Materialien, wie z.B. Metallgewebe oder Kunststoffgewebe verwendet.

Die verwendete Suspension, die zumindest eine anorganische Komponente und zumindest ein Metalloxidsol, zumindest ein Halbmetalloxidsol oder zumindest ein Mischmetalloxidsol oder eine Mischung dieser Sole aufweisen kann, kann durch Suspendieren zumindest einer anorganischen Komponente in zumindest einem dieser Sole hergestellt werden.

Die Sole werden durch Hydrolisieren zumindest einer Verbindung, vorzugsweise zumindest einer Metallverbindung, zumindest einer Halbmetallverbindung oder zumindest einer Mischmetallverbindung mit zumindest einer Flüssigkeit, einem Feststoff oder einem Gas erhalten, wobei es vorteilhaft sein kann, wenn als Flüssigkeit z.B. Wasser, Alkohol oder eine Säure, als Feststoff Eis oder als Gas Wasserdampf oder zumindest eine Kombination dieser Flüssigkeiten, Feststoffe oder Gase eingesetzt wird. Ebenso kann es vorteilhaft sein, die zu hydrolisierende Verbindung vor der Hydrolyse in Alkohol oder eine Säure oder eine Kombination dieser Flüssigkeiten zu geben. Als zu hydrolisierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung, ein Metallnitrat, ein Metallchlorid, ein Metallcarbonat oder zumindest eine Halbmetallalkoholatverbindung ausgewählt aus den Verbindungen der Elemente Ti, Zr, Al, Si, Sn, Ce und Y oder der Lanthanoiden und Actinoiden, wie z.B. Titanalkoholate, wie z.B. Titanisopropylat, Siliziumalkoholate, Zirkoniumalkoholate, oder ein Metallnitrat, wie z.B. Zirkoniumnitrat, hydrolisiert.

Es kann vorteilhaft sein, die Hydrolyse der zu hydrolisierenden Verbindungen mit zumindest dem halben Molverhältnis Wasser, Wasserdampf oder Eis, bezogen auf die hydrolisierbare Gruppe, der hydrolisierbaren Verbindung, durchzuführen.

Die hydrolisierte Verbindung kann zum Peptisieren mit zumindest einer organischen oder anorganischen Säure, vorzugsweise mit einer 10 bis 60 %igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

Es können nicht nur Sole verwendet werden, die wie oben beschrieben hergestellt wurden, sondern auch handelsübliche Sole, wie z.B. Titannitratsol, Zirkonnitratsol oder Silicasol.

Es kann vorteilhaft sein, wenn zumindest eine anorganische Komponente, welche eine Korngöße von 1 bis 10.000 nm aufweist, in zumindest einem Sol suspendiert wird. Vorzugsweise wird eine anorganische Komponente, die zumindest eine Verbindung, ausgewählt aus Metallverbindungen, Halbmetallverbindungen, Mischmetallverbindungen und Metallmischverbindungen mit zumindest einem der Elemente der 3. bis 7. Hauptgruppe, oder zumindest eine Mischung dieser Verbindungen aufweist, suspendiert. Besonders bevorzugt wird zumindest eine anorganische Komponente, die zumindest eine Verbindung aus den Oxiden der Nebengruppenelemente oder den Elementen der 3. bis 5. Hauptgruppe, vorzugsweise Oxide ausgewählt aus den Oxiden der Elemente Sc, Y, Zr, Nb, Ce, V, Cr, Mo, W, Mn, Fe, Co, B, Al, In, Tl, Si, Ge, Sn, Pb und Bi, wie z.B. Y₂O₃, ZrO₂, Fe₂O₃, Fe₃O₄, SiO₂, Al₂O₃ aufweist, suspendiert. Die anorganische Komponente kann auch Alumosilicate, Aluminiumphospate, Zeolithe oder partiell ausgetauschte Zeolithe, wie z.B. ZSM-5, Na-ZSM-5 oder Fe-ZSM-5 oder amorphe mikroporöse Mischoxide, die bis zu 20 % nicht hydrolisierbare organische Verbindungen enthalten können, wie z.B. Vanadinoxid-Siliziumoxid-Glas oder Aluminiumoxid-Siliciumoxid-Methylsiliciumsesquioxid-Gläser, aufweisen.
Vorzugsweise beträgt der Massenanteil der suspendierten Komponente das 0,1 bis 500-fache der eingesetzten hydrolisierten Verbindung.

Durch die geeignete Wahl der Korngröße der suspendierten Verbindungen in Abhängigkeit von der Größe der Poren, Löcher oder Zwischenräume des durchbrochenen stoffdurchlässigen Trägers, aber auch durch die Schichtdicke des erfindungsgemäßen Verbundwerkstoffes sowie das anteilige Verhältnis Sol-Lösungsmittel-Metalloxid läßt sich die Rißfreiheit im erfindungsgemäßen Verbundwerkstoff optimieren.

Bei der Verwendung eines Maschengewebes mit einer Maschenweite von z.B. 100 µm können zur Erhöhung der Rißfreiheit vorzugsweise Suspensionen verwendet werden, die eine suspendierte Verbindung mit einer Korngröße von mindestens 0,7 µm aufweist. Im allgemeinen sollte das Verhältnis Korngröße zu Maschen- bzw. Porengröße von 1 : 1.000 bis 50 : 1.000 betragen. Der erfindungsgemäße Verbundwerkstoff kann vorzugsweise eine Dicke von 5 bis 1000 µm, besonders bevorzugt von 50 bis 150 µm, aufweisen. Die Suspension aus Sol und zu suspendierenden Verbindungen weist vorzugsweise ein Verhältnis Sol zu suspendierenden Verbindungen von 0,1 : 100 bis 100 : 0,1, vorzugsweise von 0,1 : 10 bis 10 : 0,1 Gewichtsteilen auf.

Die auf oder im oder aber auf und im Träger vorhandene Suspension kann durch Erwärmen dieses Verbundes auf 50 bis 1.000 °C verfestigt werden. In einer besonderen Ausführungsvariante des erfindungsgemäßen Verfahrens wird dieser Verbund für 10 min. bis 5 Stunden einer Temperatur von 50 bis 100 °C ausgesetzt. In einer weiteren besonderen Ausführungsart des erfindungsgemäßen Verfahrens wird dieser Verbund für 1 Sekunde bis 10 Minuten einer Temperatur von 100 bis 800 °C ausgesetzt.

Das erfindungsgemäße Erwärmen des Verbundes kann mittels erwärmter Luft, Heißluft, Infrarotstrahlung, Mikrowellenstrahlung oder elektrisch erzeugter Wärme, erfolgen. In einer besonderen Ausführungsart des erfindungsgemäßen Verfahrens kann es vorteilhaft sein, wenn das Erwärmen des Verbundes unter Nutzung des Trägermaterials als elektrische Widerstandheizung erfolgt. Zu diesem Zweck kann über zumindest zwei Kontakte der Träger an eine Stromquelle angeschlossen werden. Je nach Stärke der Stromquelle und Höhe der abgegebenen Spannung heizt sich der Träger bei eingeschaltetem Strom auf und die in und auf seiner Oberfläche vorhandene Suspension kann durch diese Erwärmung verfestigt werden.

In einer weiteren besonders bevorzugten Ausführungsart des erfindungsgemäßen Verfahrens kann das Verfestigen der Suspension dadurch erreicht werden, daß die Suspension auf oder in oder aber auf und in einen vorgewärmten Träger gebracht wird und somit direkt nach dem Aufbringen verfestigt wird.

Erfindungsgemäß kann der ionenleitende Verbundwerkstoff durch Einsatz zumindest einer polymergebundener Brönstedtsäure oder -base bei der Herstellung des Verbundwerkstoffes erhalten werden. Vorzugsweise kann der ionenleitende Verbundwerkstoff durch Einsatz zumindest eines Sols, das Festladungen tragende Polymerpartikel oder Polyelektrolytlösungen umfaßt, erhalten werden. Es kann vorteilhaft sein, wenn die Festladungen tragende Polymeren oder der Polyelektrolyten einen Schmelz- oder Erweichungspunkt unterhalb von 500°C aufweisen. Vorzugsweise werden als Festladungen tragende Polymere oder Polyelektrolyte sulfoniertes Polytetrafluoethylen, sulfoniertes Polyvinylidenfluorid, aminolysiertes Polytetrafluorethylen, aminolysiertes Polyvinylidenfluorid, sulfoniertes Polysulfon, aminolysiertes Polysulfon, sulfoniertes Polyetherimid, aminolysiertes Polyetherimid oder ein Gemisch aus diesen verwendet. Der Anteil der Festladungen tragenden Polymeren oder der Polyelektrolyten im eingesetzten Sol beträgt vorzugsweise von 0,001 Gew.-% und 50,0 Gew.-%, besonders bevorzugt von 0,01 % und 25 %. Während der Herstellung und Bearbeitung des ionenleitenden Verbundwerkstoffes kann das Polymer sich chemisch und physikalisch oder chemisch oder physikalisch verändern.

Durch Zugabe einer geringen Menge eines Polymers das saure oder basische Gruppen trägt, und zudem noch eine gewisse Temperaturstabilität besitzt, wie z.B. Nafion®, zum Sol, welches für die Herstellung des Verbundwerkstoffes eingesetzt wird, läßt sich ein ionenleitender stoffdurchlässiger Verbundwerkstoff herstellen mit besonderen Eigenschaften herstellen. Bei der Verfestigung des Materials kommt es zum Aufschmelzen des Polymers. Dieses legt sich als dünner Film um die jeweiligen anorganischen Partikel und somit bilden sich dann an den Oberflächen ionogen ausgestattete Poren, die sehr gut für die Ionenleitung geeignet sind. Durch die kurzzeitige Temperaturbehandlung kommt es nur zu einem sehr geringfügigen Abbau der Ladungen im Polymer. Erhöht man den Polymeranteil bei der Herstellung, so werden die Schichten auf den Partikeln immer größer, bis der Punkt erreicht wird, an dem die Poren vollständig gefüllt werden. Dadurch erhält man direkt in einem Prozeßschritt einen durch den porösen Träger unterstützten unporösen ionenleitenden Verbundwerkstoff. Dieser hat eine um die Partikelmenge verringerte Ionenleitfähigkeit, besitzt aber eine bessere mechanische Festigkeit als das Ausgangsmaterial. Dies gilt vor allem für Anwendungen bei höheren Temperaturen.

Der ionenleitende Verbundwerkstoff wird durch Einsatz eines Sols, welches zumindest ein ionenleitendes Material oder zumindest ein Material aufweist, welches nach einer weiteren Behandlung ionenleitende Eigenschaften aufweist, bei der Herstellung des Verbundwerkstoffes erhalten. Vorzugsweise werden dem Sol Materialien zugesetzt, die zur Bildung von anorganischen ionenleitenden Schichten auf den inneren und/oder äußeren Oberflächen der im Verbundwerkstoff enthaltenen Partikel führen.

Erfindungsgemäß kann das Sol durch Hydrolysieren zumindest einer Metallverbindung, zumindest einer Halbmetallverbindung oder zumindest einer Mischmetallverbindung oder eine Kombination dieser Verbindungen mit einer Flüssigkeit, einem Gas und/oder einem Feststoff erhalten werden. Als Flüssigkeit, Gas und/oder Feststoff zur Hydrolyse wird vorzugsweise Wasser, Wasserdampf, Eis, Alkohol oder Säure oder eine Kombination dieser Verbindungen eingesetzt. Es kann vorteilhaft sein, die zu hydrolysierende Verbindung vor der Hydrolyse in Alkohol und/oder in eine Säure zu geben. Vorzugsweise wird zumindest ein Nitrat, Chlorid, Carbonat oder ein Alkoholat eines Metalls oder Halbmetalls hydrolysiert. Ganz besonders bevorzugt ist das zu hydrolisierende Nitrat, Chlorid, Carbonat, oder Alkoholat eine Verbindung der Elemente Ti, Zr, V, Mn, W, Mo, Cr, Al, Si, Sn und/oder Y.

Es kann vorteilhaft sein, wenn eine zu hydrolysierende Verbindung nicht hydrolysierbare Gruppen neben hydrolysierbaren Gruppen trägt. Vorzugsweise wird als eine solche zu hydrolysierende Verbindung eine Alkyl-trialkoxi- oder Dialkyl-dialkoxi- oder Trialkyl-alkoxi-verbindung der Elements Silizium verwendet.

Die ionenleitende Komponente an den inneren und/oder äußeren Oberflächen sind dann nicht vollständig umgesetzte Hydroxyl-Gruppen, die im Kristallgitter gebunden sind und daher nur eine Oberflächendiffusion zulassen, ohne selbst angegriffen zu werden. Setzt man nun noch Zeolithe oder β-Alumosilikate als Partikel dem Sol zu, so erhält man einen nahezu gleichmäßigen Verbundwerkstoff, der nahezu gleichmäßige Ionenleitungseigenschaften zeigt.

Erfindungsgemäß kann dem Sol zur Herstellung des Verbundwerkstoffes zumindest eine in Wasser und/oder Alkohol lösliche Säure oder Base zugegeben werden. Vorzugsweise wird eine Säure oder Base der Elemente Na, Mg, K, Ca, V, Y, Ti, Cr, W, Mo, Zr, Mn, Al, Si, P oder S zugegeben.

Das Sol, welches zur erfindungsgemäßen Herstellung des ionenleitenden Verbundwerkstoffes eingesetzt wird, kann auch nichtstöchiometrische Metall-, Halbmetall- oder Nichtmetalloxide beziehungsweise Hydroxide umfassen, die durch Änderung der Oxidationsstufe des entsprechenden Elements erzeugt wurden. Die Änderung der Oxidationsstufe kann durch Reaktion mit organische Verbindungen oder anorganische Verbindungen oder durch elektrochemische Reaktionen erfolgen. Vorzugsweise erfolgt die Änderung der Oxidationsstufe durch Reaktion mit einem Alkohol, Aldehyd, Zucker, Ether, Olefin, Peroxid oder Metallsalz. Verbindungen die auf diese Weise die Oxidationsstufe ändern können z.B. Cr, Mn, V, Ti, Sn, Fe, Mo, W oder Pb sein.

Erfindungsgemäß kann es vorteilhaft sein, wenn dem Sol Substanzen zugesetzt werden, die zur Bildung von anorganischen ionenleitenden Strukturen führen. Solche Substanzen können z.B. Zeolith- und/oder β-Alumosilikatpartikel sein.

Auf diese Weise läßt sich z.B. ein fast ausschließlich aus anorganischen Stoffen aufgebauter ionenleitender stoffdurchlässiger Verbundwerkstoff erfindungsgemäß herstellen. Hierbei muß größerer Wert auf die Zusammensetzung des Sols gelegt werden, da ein Gemisch aus verschiedenen hydrolysierbaren Komponenten eingesetzt werden muß. Diese einzelnen Komponenten müssen sorgfältig gemäß ihrer Hydrolysegeschwindigkeit aufeinander abgestimmt werden. Es ist auch möglich, die nicht stöchiometrischen Metalloxidhydrat-Sole durch entsprechende Redoxreaktionen zu erzeugen. Recht gut sind auf diesem Wege die Metalloxidhydrate der Elemente Cr, Mn, V, Ti, Sn, Fe, Mo, W oder Pb zugänglich. Die ionenleitende Verbindung an den inneren und äußeren Oberflächen sind dann verschiedene teilweise hydrolysierte oder nicht hydrolysierte Oxide, Phosphate, Phosphide, Phosphonate, Stannate, Plumbate, Chromate, Sulfate, Sulfonate, Vanadate, Wolframate, Molybdate, Manganate, Titanate, Silikate oder Gemische dieser der Elemente Al, K, Na, Ti, Fe, Zr, Y, Va, W, Mo, Ca, Mg, Li, Cr, Mn, Co, Ni, Cu oder Zn oder Gemische dieser Elemente.

In einer weiteren bevorzugten Ausführungsart des erfindungsgemäßen Verfahrens können schon vorhandene stoffdurchlässige ionenleitende Verbundwerkstoffe mit ionenleitenden Materialien oder mit Materialien, die nach einer weiteren Behandlung ionenleitende Eigenschaften aufweisen, behandelt werden. Dabei werden Verbundwerkstoffe eingesetzt, die nach dem oben beschriebenen Verfahren erhalten wurden.

Erfindungsgemäß werden ionenleitende stoffdurchlässige Verbundwerkstoff durch Behandlung eines Verbundwerkstoffes, der eine Porenweite von 0,001 bis 5 µm und keine ionenleitenden oder ionenleitende Eigenschaften aufweist, mit zumindest einem ionenleitenden Material oder mit zumindest einem Material, welches nach einer weiteren Behandlung ionenleitende Eigenschaften aufweist, erhalten.

Die Behandlung des Verbundwerkstoffes mit zumindest einem ionenleitenden Material oder zumindest einem Material, welches nach einer weiteren Behandlung ionenleitende Eigenschaften aufweist, kann durch Tränken, Tauchen, Bestreichen, Aufwalzen, Aufrakeln, Besprühen oder andere Beschichtungstechniken erfolgen. Der Verbundwerkstoff wird nach der Behandlung mit zumindest einem ionenleitenden Material oder zumindest einem Material, welches nach einer weiteren Behandlung ionenleitende Eigenschaften aufweist, vorzugsweise thermisch behandelt. Besonders bevorzugt erfolgt die thermische Behandlung bei einer Temperatur von 100 bis 700 °C.

Vorzugsweise wird das ionenleitende Material oder das Material, welches nach einer weiteren Behandlung ionenleitende Eigenschaften aufweist, in Form einer Lösung mit einem Lösungsmittelanteil von 1 bis 99,8 % auf den Verbundwerkstoff aufgebracht. Erfindungsgemäß können als Material zur Herstellung des ionenleitenden Verbundwerkstoffs Polyorganylsiloxane, die zumindest einen ionischen Bestandteil aufweisen, eingesetzt werden. Die Polyorganylsiloxane können unter anderem Polyalkyl- und/oder Polyarylsiloxane und/oder weitere Bestandteile umfassen.

Es kann vorteilhaft sein, wenn als Material zur Herstellung des ionenleitenden Verbundwerkstoffs zumindest eine Brönstedtsäure oder -base eingesetzt wird. Ebenso kann es vorteilhaft sein, wenn als Material zur Herstellung des ionenleitenden Verbundwerkstoffs zumindest eine saure und/oder basische Gruppen enthaltende Trialkoxysilanlösung oder -suspension eingesetzt wird. Vorzugsweise ist zumindest eine der sauren oder basischen Gruppen eine quartäre Ammonium-, Phosphonium-, Alkylsulfonsäure-, oder Carbonsäuregruppe.

So kann man mit Hilfe des erfindungsgemäßen Verfahrens z.B. einen bereits bestehenden stoffdurchlässigen Verbundwerkstoff nachträglich durch die Behandlung mit einem Silan ionisch ausstatten. Dazu wird eine 1 bis 20%ige Lösung dieses Silans in einer Wasser enthaltenden Lösung angesetzt und der Verbundwerkstoff wird hierin getaucht. Als Lösungsmittel können aromatische und aliphatische Alkohole, aromatische und aliphatische Kohlenwasserstoffe und andere gängige Lösemittel oder Gemische verwendet werden. Vorteilhaft ist der Einsatz von Ethanol, Octanol, Toluol, Hexan, Cylohexan und Octan. Nach abtropfen der anhaftenden Flüssigkeit wird der getränkte Verbundwerkstoff bei ca. 150 °C getrocknet und kann entweder direkt oder nach mehrmaliger nachfolgender Beschichtung und Trocknung bei 150 °C als ionenleitender stoffdurchlässiger Verbundwerkstoff genutzt werden. Hierzu eigenen sich sowohl kationische als auch anionische Gruppen tragende Silane.

Es kann weiterhin vorteilhaft sein, wenn die Lösung oder Suspension zur Behandlung des Verbundwerkstoffs neben einem Trialkoxysilan auch saure oder basische Verbindungen und Wasser umfaßt. Vorzugsweise umfassen die sauren oder basischen Verbindungen zumindest eine dem Fachmann bekannte Brönstedt- oder Lewissäure oder -base.

Erfindungsgemäß kann der Verbundwerkstoff aber auch mit Lösungen, Suspensionen oder Solen behandelt werden die zumindest ein ionenleitendes Material aufweisen. Diese Behandlung kann einmal vorgenommen werden oder mehrfach wiederholt werden. Mit dieser Ausführungsart des erfindungsgemäßen Verfahrens erhält man Schichten von einem oder mehreren gleichen oder verschiedenen teilweise hydrolysierten oder nicht hydrolysierten Oxiden, Phosphaten, Phosphiden, Phosphonaten, Sulfaten, Sulfonaten, Vanadaten, Wolframaten, Molybdaten, Manganaten, Titanaten, Silikaten oder Gemische dieser der Elemente Al, K, Na, Ti, Fe, Zr, Y, Va, W, Mo, Ca, Mg, Li, Cr, Mn, Co, Ni, Cu oder Zn oder Gemische dieser Elemente.

Ionenleitende stoffdurchlässige Verbundwerkstoffe können in vielen Prozessen eingesetzt werden. Aufgrund der sauren Zentren an den inneren und/oder äußeren Oberflächen sind sie in der Lage viele Reaktionen zu katalysieren. Hier wären z.B. die Veresterungs- und Acetalisierungsreaktionen zu nennen, aber auch Umlagerungen und viele andere sauer katalysierte Reaktionen.

Ebenfalls können die erfindungsgemäßen ionenleitenden Verbundwerkstoffe in Brennstoffzellen eingesetzt werden. Dies bietet sich vor allem vor dem Hintergrund der besseren thermischen Stabilität im Vergleich zu Polymermembranen an. Heute ist der Arbeitsbereich von Proton Exchange Membrane Brennstoffzellen durch den Einsatz von Nafion als Membran auf eine maximale Temperatur von 120 bis 130 °C beschränkt. Höhere Temperaturen führen zu einer starken Abnahme der Ionenleitfähigkeit des Nafions. Eine höhere Betriebstemperatur führt beim genannten Brennstoffzellen-Typ zu einer deutlichen Verbesserung der Standzeiten, da das Problem der Katalysatorvergiftung durch Kohlenmonoxid zurückgedrängt wird. Zudem ist dadurch eine Direkt-Methanol-Brennstoffzelle leichter realisierbar.

Die erfindungsgemäßen ionenleitenden Verbundwerkstoffe eignen sich sehr gut als Ionentauscher-Membran in Elektrolyse, Membranelektrolyse und Elektrodialyse-Zellen. Sie erfüllen nahezu alle Ansprüche, die an eine Ionentauschemembran für diese Anwendungen gestellt wird. Als da wären, gute Permselektivität, hoher Ionenfluß und eine geringe Dicke der Membran.

Da ionenleitende Schichten auch gleichzeitig sehr hydrophil sind, lassen sich ionenleitende stoffdurchlässige Verbundwerkstoffe gemäß einem der Ansprüche 1 bis 20 in der Stofftrennung durch Pervaporation und Dampfpermeation bei Problemstellungen einsetzen, bei denen es um die selektive Abtrennung von Wasser aus organischen Stoffströmen geht. Hauptanwendungsgebiet ist in diesem Fall die Lösungsmitteltrocknung, da hier häufig die derzeitig eingesetzten Membranwerkstoffe aufgrund des Quellungsverhaltens der Trägerpolymere und aufgrund der relativ geringen thermischen Stabilität dieser Polymere beschränkt sind auf einige wenige Lösungsmittel (Ethanol und ähnliche) und auf Temperaturen unter 100 °C.

Die größere thermische Stabilität der erfindungsgemäßen ionenleitenden stoffdurchlässigen Verbundwerkstoffen ermöglicht zudem den Einsatz dieser bei Hochtemperaturanwendungen der Pervaporation, wie die Behandlung von Teilströmen bei einer Rektifikation. Der enorme technische Vorteil liegt hier darin, daß die zu behandelnden Teilströme nicht mehr über Wärmetauscher geführt werden müssen, sondern sie können mit der jeweiligen Prozeßtemperatur (die bei bis zu 250 °C liegen kann) direkt auf die Pervaporationsmembran geführt werden.

Die erfindungsgemäßen ionenleitenden Verbundwerkstoffe, das Verfahren zu deren Herstellung und deren Verwendung wird an Hand der folgenden Beispiele beschrieben, ohne darauf beschränkt zu sein.

### Beispiel 1.1 Nicht ionenleitender Verbundwerkstoff

a) 120 g Titantetraisopropylat werden mit 140 g entionisiertem Eis unter kräftigem Rühren bis zur Feinstverteilung des entstehenden Niederschlages gerührt. Nach Zugabe von 100 g 25 %ige Salzsäure wird bis zu Klarwerden der Phase gerührt und 280 g α-Aluminiumoxid des Typs CT3000SG der Fa. Alcoa, Ludwigshafen, zugegeben und über mehrere Tage bis zum Auflösen der Aggregate gerührt.
   Anschließend wird diese Suspension in dünner Schicht auf ein Metallnetz aufgebracht bei 550 °C innerhalb kürzester Zeit verfestigt.
b) 40 g Titantetraisopropylat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Fa. Degussa (P25) wurde bis zum Auflösen der Agglomerate gerührt. Nachdem dieser Suspension weitere 250 ml Wasser zugegeben wurde, wird sie auf einen porösen Träger (nach Beispiel 1.1 a hergestellt) aufgebracht und bei ca. 500 °C innerhalb kürzester Zeit verfestigt.

### Beispiel 1.2 Ionenleitender Verbundwerkstoff durch Zugabe von Polyelektrolyten

30 g Titantetraisopropylat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Fa. Degussa (P25) und 5 g (bis zu 30 g sind möglich) Nafion®-Pulver wurde bis zum Auflösen der Agglomerate gerührt. Anschließend wurde diese Suspension auf einen nach Beispiel 1.1 a hergestellten porösen Träger aufgebracht und bei ca. 500 °C innerhalb kürzester Zeit verfestigt.

### Beispiel 1.3

50 g Titantetraisopropylat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Fa. Degussa (P25) und 15 g eines kationischen Polyelektrolyten (Praestol 2350 der Fa. Stockhausen) wurde bis zum Auflösen der Agglomerate gerührt. Anschließend wurde diese Suspension auf einen porösen Träger entsprechend Beispiel 1.1 a aufgebracht und bei ca. 300 °C innerhalb kürzester Zeit verfestigt.

### Vergleichsbeispiel 1.4 Ionenleitender Verbundwerkstoff durch anorganische Schichten

20 g Aluminiumalkoholat und 17 g Vanadiumalkoholat wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40g Titandioxid der Fa. Degussa (P25) wurde noch bis zum Auflösen aller Agglomerate gerührt. Nach Einstellung eines pH-Wertes von ca. 6 wurde die Suspension auf einen nach Beispiel 1.1 a hergestellten Verbundwerkstoff aufgerakelt. Man erhielt dann einen mit negativen Festladungen ausgestatteten ionenleitenden Verbundwerkstoff.

### Vergleichsbeispiel 1.5

20 g Aluminiumalkoholat oder 20 g Tetraethylorthosilikat und 17 g Kaliumpermanganat wurden mit 20 g Wasser hydrolysiert und mit 6 %iger Wasserstoffperoxid-Lösung vollständig reduziert. Der entstandene Niederschlag wurde mit 100 g Natronlauge (25 %ig) teilweise peptisiert. Diese Suspension wurde 24 Stunden gerührt und nach Zugabe von 40 g Titandioxid der Fa. Degussa (P25) wurde noch bis zum Auflösen aller Agglomerate weitergerührt. Nach Einstellung eines pH-Wertes von ca. 8 wurde die Suspension auf einen nach Beispiel 1.1.a hergestellten Träger aufgebracht und innerhalb von wenigen Sekunden verfestigt. Man erhielt durch diese Methode einen mit positiven Festladungen ausgestatteten ionenleitenden Verbundwerkstoff.

### Vergleichsbeispiel 1.6

20 g Aluminiumalkoholat und 25 g Molybdänalkoholat wurden mit 20 g Wasser hydrolysiert und der entstandene Niederschlag wurde mit 100 g Natronlauge (25 %ig) peptisiert. Diese Lösung wurde bis zum Klarwerden gerührt. Nach Einstellung eines pH-Wertes von ca. 8 wurde die Suspension wurde die Suspension in dünner Schicht auf einen nach Beispiel 1.1.b hergestellten Verbundwerkstoff aufgesprüht und innerhalb von wenigen Sekunden verfestigt. Man erhielt einen mit positiven Festladungen ausgestatteten ionenleitenden Verbundwerkstoff.

### Vergleichsbeispiel 1.7 Ionenleitender Verbundwerkstoff mit Zeolithen

10 g Methyltriethoxisilan, 30 g Tetraethylorthosiloxan und 10 g Aluminiumtrichlorid wurden mit 50 g Wasser in 100 g Ethanol hydrolysiert. Hierzu wurden dann 190 g Zeolith USY (CBV 600 der Fa. Zeolyst) gegeben. Es wurde noch solange gerührt, bis sich alle Agglomerate aufgelöst hatten und anschließend wurde die Suspension auf einen nach Beispiel 1.1 a hergestellten Verbundwerkstoff gestrichen und durch Temperaturbehandlung bei 700 °C verfestigt. So erhielt man einen kationenleitenden stoffdurchlässigen Verbundwerkstoff.

### Beispiel 2.1 Kat. Reaktionen (Veresterung)

Als Katalysator für eine Veresterungsreaktion wurde ein ionenleitender Verbundwerkstoff mit negativen Festladungen an der Oberfläche folgendermaßen hergestellt. Es wurden 80 g Titantetraisopropylat mit 20 g Wasser hydrolysiert und der entstandene Niederschlag wird mit 120 g Salpetersäure (25 %ig) peptisiert. Diese Lösung wurde bis zum Klarwerden gerührt und nach Zugabe von 100 g Aluminiumoxid der Fa. Alcoa und 15 g Nafion® 117 (Aldrich) wurde bis zum Auflösen der Agglomerate gerührt. Anschließend wurde diese Suspension auf einen nach Beispiel 1.1 a hergestellten Verbundwerkstoff aufgebracht und bei ca. 500 °C innerhalb kürzester Zeit verfestigt.

Der so hergestellte Verbundwerkstoff wurde in ein Reaktionsgefäß dermaßen eingebracht, daß die Reaktionslösung (Essigsäure und n-Butanol im stöchiometrischen Verhältnis) durch die Poren des Verbundwerkstoffs hindurch gepreßt wird. In den Poren und im nachgeschalteten Reaktionsraum fand dann die katalysierte Veresterung statt. Diese Art der Reaktionsführung führt zwar nicht zu gleich hohen Raum-Zeit-Ausbeuten wie eine homogen katalysierte Reaktion (mit p-Toluolsulfonsäure als Katalysator), hat aber den Vorteil, daß die Behälter nicht vom Katalysator angegriffen werden und der Katalysator nicht in einem gesonderten Aufarbeitungsschritt vom Produkt abgetrennt werden muß. Zudem ist die spezifische aktive Oberfläche des ionenleitenden Verbundwerkstoffes größer als die der verfügbaren Nafion-Partikel, was zu einer Steigerung der Raum-Zeit-Ausbeute gegenüber bekannten heterogen katalysierten Veresterungen führt.

### Vergleichsbeispiel 2.2 Brennstoffzellen

20 g Aluminiumethanolat und 17 g Vanadiumchlorid wurden mit 20 g Wasser hydrolysiert und der entstandene Niederschlag wurde mit 120 g Salpetersäure (25 %ig) peptisiert. Diese Lösung wurde bis zum Klarwerden gerührt und nach Zugabe von 40 g Titandioxid der Fa. Degussa (P25) wurde noch bis zum Auflösen aller Agglomerate gerührt. Nach Einstellung eines pH-Wertes von ca. 6 wurde die Suspension auf einen porösen Träger aufgebracht und innerhalb einiger Sekunden bei ca. 500 °C verfestigt. Anschließend wurde diese Suspension in einer sehr dünnen Schicht auf eine poröse Membran die entsprechend Beispiel 1.1 a hergestellt wurde aufgetragen. Nach der Temperung bei 450 °C erhält man eine protonenleitende Membran die in einer PEM-Brennstoffzelle eingesetzt werden kann.

Untersuchungen zur Protonenleitfähigkeit dieser und einer kommerziell erhältlichen Membrane (Nafion 117, Fa. Aldrich) bei unterschiedlichen Temperaturen und einer angelegten Spannung von 2,0 Volt ergaben die in der folgenden Tabelle zusammengefaßten Ergebnisse.

| **Membran** | **U [V]** | **T [°C]** | **I [mA/cm2]** |
|---|---|---|---|
| Nafion 117 | 2 | 60 | 124 |
| | 2 | 80 | 107 |
| | 2 | 110 | 41 |
| | 2 | 130 | 5 |
| | 2 | 150 | < 2 |
| Bsp. 2.2 | 2 | 60 | 105 |
| | 2 | 80 | 101 |
| | 2 | 110 | 98 |
| | 2 | 130 | 71 |
| | 2 | 150 | 64 |

### Beispiel 23 Elektrodialyse

Bei der Aufarbeitung von Säuren oder Basen, die im Gemisch mit organischen Lösungsmitteln anfallen sind Elektrodialysemembranen die aus organischen Polymeren bestehen ungeeignet. In einem solchen Fall wurde eine besser geeignete Membran folgendermaßen hergestellt. 80 g Titantetraisopropylat wurden mit 20 g Wasser hydrolysiert und der entstandene Niederschlag wird mit 120 g Salpetersäure (25 %ig) peptisiert. Diese Lösung wurde bis zum Klarwerden gerührt und nach Zugabe von 60 g Titandioxid P25 der Fa. Degussa und 10 g Nafion® 117 (Aldrich) wurde bis zum Auflösen der Agglomerate gerührt.

Mit einer so hergestellten Kationentauscher-Membran lassen sich Stoffströme mittels Elektrodialyse aufarbeiten, die größere Mengen an Weichmachern oder Lösungsmitteln enthalten. Durch den Einsatz einer solchen Membrane gelang die Aufarbeitung eines Natriumhydroxid enthaltenden Abwassers, daß größere Mengen eines langkettigen Alkohols enthielt, der organische Polymermembranen durch starke Quellung zerstörte.

### Vergleichsbeispiel 2.4 Pervaporation

Da ionenleitende Schichten auch gleichzeitig sehr hydrophil sind, lassen sich ionenleitende stoffdurchlässige Verbundwerkstoffe in der Stofftrennung durch Pervaporation sehr gut einsetzen. Hierzu wurde eine folgendermaßen hergestellte Membrane genutzt. 20g Aluminiumalkoholat und 25 g Molybdenyl acetylacetonat (Lancaster) wurden mit 20 g Wasser hydrolysiert und der entstandene Niederschlag wurde mit 100 g Natronlauge (25 %ig) peptisiert. Diese Lösung wurde bis zum Klarwerden gerührt und nach Zugabe von 40 g Titandioxid der Fa. Degussa (P25) wurde noch bis zum Auflösen aller Agglomerate gerührt. Nach Einstellung eines pH-Wertes von ca. 8 wurde die Suspension auf einen nach Beispiel 1.1 a hergestellten porösen Träger aufgebracht und innerhalb kürzester Zeit bei 500 °C verfestigt.

Mit dieser Membran war es möglich ein Gemisch aus 80 % Ethanol und 20 % Wasser zu entwässern. Der Fluß durch die Membrane lag bei ca. 1 050 g m⁻² h⁻¹ mit einem Ethanolgehalt von ca. 2 % bis 3 % im Permeat. Die Temperatur des Retentats betrug 115 °C. Der Permeatdruck betrug 25 mbar.

## Patentansprüche

1. Ionenleitende Eigenschaften aufweisender, stoffdurchlässiger Verbundwerkstoff auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist,
ausgewählt aus den Oxiden der Elemente Sc, Y, Zr, Nb, Ce, V, Cr, Mo, W, Mn, Fe, Co, B, Al, In, T1, Si, Ge, Sn, Pb und Bi,
**dadurch** hergestellt,
daß in und auf zumindest einen durchbrochenen und stoffdurchlässigen Träger zumindest eine Suspension gebracht wird, die zumindest eine anorganische Komponente aus zumindest einer Verbindung zumindest eines Metalls, eines Halbmetalls oder eines Mischmetalls mit zumindest einem der Elemente der 3. bis 7. Hauptgruppe aufweist und die Suspension durch zumindest einmaliges Erwärmen auf und im Trägermaterial verfestigt wird,
**dadurch gekennzeichnet,**
**daß** im Gefüge des Verbundwerkstoffes zumindest ein anorganisches und/oder organisches Material, das ionenleitende Eigenschaften aufweist, als Beimischung enthalten ist,
und die inneren und/oder äußeren Oberflächen der im Verbundwerkstoff vorhandenen Partikel mit einer Schicht aus einem anorganischen und/oder organischen Material überzogen sind
oder in den Zwischenkornvolumen des Verbundwerkstoffes zumindest ein anorganisches und/oder organisches Material, welches ionenleitende Eigenschaften aufweist, vorhanden ist,
und
das ionenleitende Eigenschaften aufweisende Material ionische Gruppen aus der Gruppe der Sulfonsäure-, Phosphonsäure-, Carbonsäure-, tetra-Organylammonium-, tetra-Organylphosphoniumgruppen oder Gemische dieser Gruppen aufweist,
oder
das organische ionenleitende Material zumindest ein Polymer, ausgewählt aus sulfoniertem Polytetrafluoethylen, sulfoniertem Polyvinylidenfluorid, aminolysiertem Polytetrafluorethylen, aminolysiertem Polyvinylidenfluorid, sulfoniertem Polysulfon, aminolysiertem Polysulfon, sulfoniertem Polyetherimid, aminolysiertem Polyetherimid oder ein Gemisch aus diesen, ist,
oder
das anorganische ionenleitende Material zumindest eine Verbindung aus der Gruppe der Oxide, Phosphate, Phosphonate, Sulfate, Titanate, Silikate, Alumosilikate oder Gemische dieser Verbindungen zumindest des Elementes Zr, oder eines Gemisches von Zr und Li ist,
und der Verbundwerkstoff bei einer Temperatur von -40 °C bis 200 °C ionenleitend ist.

2. Verbundwerkstoff nach Anspruch 1,
**dadurch gekennzeichnet,**
**daß** die Schicht eine Dicke von 0,0001 bis 1 µm aufweist.

3. Verbundwerkstoffnach Anspruch 1,
**dadurch gekennzeichnet,**
**daß** die Schicht eine Dicke von 0,001 bis 0,05 µm aufweist.

4. Verbundwerkstoffnach Anspruch 1,
**dadurch gekennzeichnet,**
**daß** zumindest ein anorganisches und/oder organisches Material, welches ionenleitende Eigenschaften aufweist, die Zwischenräume des Verbundwerkstoffes ausfüllt.

5. Verbundwerkstoffnach Anspruch 1,
**dadurch gekennzeichnet,**
**daß** die ionischen Gruppen chemisch und/oder physikalisch an die anorganischen Partikel gebundene organische Verbindungen sind.

6. Verbundwerkstoff nach Anspruch 5,
**dadurch gekennzeichnet,**
**daß** die ionischen Gruppen über Aryl- und/oder Alkylketten mit der inneren und/oder äußeren Oberfläche der im Verbundwerkstoff vorhandenen Partikel verbunden sind.

7. Verbundwerkstoff nach Anspruch 1,
**dadurch gekennzeichnet,**
**daß** als anorganische ionenleitende Materialien zumindest eine teilhydrolysierte Verbindung aus der Gruppe der Oxide, Phosphate, Phosphonate, Sulfate, Titanate, Silikate, Alumosilikate oder Gemische dieser Verbindungen zumindest eines der Al, Zr, Li oder ein Gemisch dieser Elemente vorhanden ist.

8. Verbundwerkstoff nach zumindest einem der Ansprüche 1 oder 7,
**dadurch gekennzeichnet,**
**daß** als anorganisches ionenleitendes Material zumindest eine teilweise nicht hydrolysierbare Gruppen tragende amorphe und/oder kristalline Verbindung zumindest eines der Elemente Zr oder A1, oder ein Gemisch dieser Elemente oder Verbindungen vorhanden ist.

9. Verbundwerkstoff nach zumindest einem der Ansprüche 1 bis 8,
**dadurch gekennzeichnet,**
**daß** der ionenleitende Verbundwerkstoff flexibel ist

10. Verbundwerkstoff nach zumindest einem der Ansprüche 1 bis 9,
**dadurch gekennzeichnet,**
**daß** der ionenleitende Verbundwerk bis zu einem kleinsten Radius von 1 mm biegbar ist.

11. Verfahren zur Herstellung eines Verbundwerkstoffes gemäß zumindest einem der Ansprüche 1 bis 10 mit ionenleitenden Eigenschaften auf Basis zumindest eines durchbrochenen und stoffdurchlässigen Trägers, der auf zumindest einer Seite des Trägers und im Inneren des Trägers zumindest eine anorganische Komponente aufweist, die im wesentlichen zumindest eine Verbindung aus einem Metall, einem Halbmetall oder einem Mischmetall mit zumindest einem Element der 3. bis 7. Hauptgruppe aufweist, **dadurch gekennzeichnet,**
**daß** in und auf zumindest einen durchbrochenen und stoffdurchlässigen Träger, zumindest eine Suspension gebracht wird, die zumindest eine anorganische Komponente aus zumindest einer Verbindung zumindest eines Metalls, eines Halbmetalls oder eines Mischmetalls mit zumindest einem der Elemente der 3. bis 7. Hauptgruppe aufweist und durch zumindest einmaliges Erwärmen die Suspension auf und im Trägermaterial verfestigt wird,
und
**daß** der ionenleitende Verbundwerkstoff durch Einsatz eines Sols, welches zumindest ein ionenleitendes Material oder zumindest ein Material aufweist, welches nach einer weiteren Behandlung ionenleitende Eigenschaften aufweist, bei der Herstellung des Verbundwerkstoffes erhalten wird.

12. Verfahren nach Anspruch 11,
**dadurch gekennzeichnet,**
**daß** der Verbundwerkstoff durch Einsatz zumindest einer polymergebundener Brönstedtsäure oder -base bei der Herstellung des Verbundwerkstoffes erhalten wird.

13. Verfahren nach zumindest einem der Ansprüche 11 oder 12,
**dadurch gekennzeichnet,**
**daß** der ionenleitende Verbundwerkstoff durch Einsatz zumindest eines Sols, das Festladungen tragende Polymerpartikel oder Polyelektrolytlösungen umfaßt, erhältlich ist.

14. Verfahren nach Anspruch 13,
**dadurch gekennzeichnet,**
**daß** das Festladungen tragende Polymer oder der Polyelektrolyt einen Schmelz- oder Erweichungspunkt unterhalb von 500°C besitzt.

15. Verfahren nach zumindest einem der Ansprüche 13 oder 14,
**dadurch gekennzeichnet,**
**daß** das Festladungen tragende Polymer oder der Polyelektrolyt sulfoniertes Polytetrafluorethylen, sulfoniertes Polyvinylidenfluorid, aminolysiertes Polytetrafluorethylen, aminolysiertes Polyvinylidenfluorid, sulfoniertes Polysulfon, aminolysiertes Polysulfon, sulfoniertes Polyetherimid, aminolysiertes Polyetherimid oder ein Gemisch aus diesen umfaßt.

16. Verfahren nach zumindest einem der Ansprüche 13 bis 15,
**dadurch gekennzeichnet,**
**daß** der Anteil des Festladungen tragenden Polymers oder des Polyelektrolyten im eingesetzten Sol zwischen 0,001 % und 50,0 % liegt.

17. Verfahren nach Anspruch 16,
**dadurch gekennzeichnet,**
**daß** der Anteil des Festladungen tragenden Polymers oder des Polyelektrolyten im eingesetzten Sol zwischen 0,01 % und 25 % liegt.

18. Verfahren nach zumindest einem der Ansprüche 13 bis 17,
**dadurch gekennzeichnet,**
**daß** das Polymer sich bei der Bearbeitung chemisch und physikalisch oder chemisch oder physikalisch verändern kann.

19. Verfahren nach zumindest einem der Ansprüche 11 bis 18,
**dadurch gekennzeichnet,**
**daß** der ionenleitende Verbundwerkstoff durch Einsatz eines Sols, welches zumindest ein ionenleitendes Material oder zumindest ein Material, welches nach einer weiteren Behandlung ionenleitende Eigenschaften aufweist, aufweist, bei der Herstellung des Verbundwerkstoffes erhalten wird.

20. Verfahren nach Anspruch 19,
**dadurch gekennzeichnet,**
**daß** dem Sol Materialien zugesetzt werden, die zur Bildung von anorganischen ionenleitenden Schichten auf den inneren und/oder äußeren Oberflächen der im Verbundwerkstoff enthaltenen Partikel fuhren.

21. Verfahren nach zumindest einem der Ansprüche 19 oder 20,
**dadurch gekennzeichnet,**
**daß** das Sol durch Hydrolysieren zumindest einer Metallverbindung, zumindest einer Halbmetallverbindung oder zumindest einer Mischmetallverbindung oder eine Kombination dieser Verbindungen mit einer Flüssigkeit, einem Gas und/oder einem Feststoff erhalten wird.

22. Verfahren nach Anspruch 21,
**dadurch gekennzeichnet,**
**daß** als Flüssigkeit, Gas und/oder Feststoff zur Hydrolyse Wasser, Wasserdampf, Eis, Alkohol oder Säure oder eine Kombination dieser Verbindungen eingesetzt wird.

23. Verfahren nach zumindest einem der Ansprüche 21 oder 22,
**dadurch gekennzeichnet,**
**daß** die zu hydrolysierende Verbindung vor der Hydrolyse in Alkohol und/oder in eine Säure gegeben wird.

24. Verfahren nach zumindest einem der Ansprüche 21 bis 23,
**dadurch gekennzeichnet,**
**daß** zumindest ein Nitrat, Chlorid, Carbonat oder ein Alkoholat eines Metalls oder Halbmetalls hydrolysiert wird.

25. Verfahren nach Anspruch 24,
**dadurch gekennzeichnet,**
**daß** das Nitrat, Chlorid, Carbonat, oder Alkoholat eine Verbindung der Elemente Zr, V, Mn, W, Mo, Cr, Al, Si, Sn und/oder Y ist.

26. Verfahren nach zumindest einem der Ansprüche 19 bis 25,
**dadurch gekennzeichnet,**
**daß** dem Sol zur Herstellung des Verbundwerkstoffes zumindest eine in Wasser und/oder Alkohol lösliche Säure oder Base zugegeben wird.

27. Verfahren nach Anspruch 26,
**dadurch gekennzeichnet,**
**daß** eine Säure oder Base der Elemente Li, Na, Mg, K, Ca, Ba, V, Y, Zn, Cr, W, Mo, Zr, Mn, Al, Si, P oder S zugegeben wird.

28. Verfahren nach zumindest einem der Ansprüche 19 bis 27,
**dadurch gekennzeichnet,**
**daß** das Sol nichtstöchiometrische Metall-, Halbmetall- oder Nichtmetalloxide beziehungsweise Hydroxide umfaßt, die durch Änderung der Oxidationsstufe des entsprechenden Elements erzeugt wurden.

29. Verfahren nach Anspruch 28,
**dadurch gekennzeichnet,**
**daß** die Änderung der Oxidationsstufe durch Reaktion mit organische Verbindungen oder anorganische Verbindungen oder durch elektrochemische Reaktionen erfolgt.

30. Verfahren nach zumindest einem der Ansprüche 28 oder 29,
**dadurch gekennzeichnet,**
**daß** die Änderung der Oxidationsstufe durch Reaktion mit einem Alkohol, Aldehyd, Zucker, Ether, Olefin, Peroxid oder Metallsalz erfolgt.

31. Verfahren nach zumindest einem der Ansprüche 28 bis 30,
**dadurch gekennzeichnet,**
**daß** Verbindungen der Elemente Cr, Mn, V, Sn, Fe, Mo, W oder Pb die Oxidationsstufe wechseln.

32. Verfahren nach zumindest einem der Ansprüche 19 bis 31,
**dadurch gekennzeichnet,**
**daß** dem Sol Substanzen zugesetzt werden, die zur Bildung von anorganischen ionenleitenden Strukturen führen.

33. Verfahren nach Anspruch 32,
**dadurch gekennzeichnet,**
**daß** dem Sol Zeolith- und/oder β-Alumosilikatpartikel zugesetzt werden.

34. Verfahren nach zumindest einem der Ansprüche 32 oder 33,
**dadurch gekennzeichnet,**
**daß** eine zu hydrolysierende Verbindung nicht hydrolysierbare Gruppen neben hydrolysierbaren Gruppen trägt.

35. Verfahren nach zumindest einem der Ansprüche 32 bis 34,
**dadurch gekennzeichnet,**
**daß** eine zu hydrolysierende Verbindung eine Alkyl-trialkoxi- oder Dialkyl-dialkoxi- oder Trialkyl-alkoxi-verbindung des Silizium ist.

36. Verwendung eines Verbundwerkstoffes gemäß zumindest einem der Ansprüche 1 bis 10 als Katalysator für sauer oder basisch katalysierten Reaktionen.

37. Verwendung eines Verbundwerkstoffes gemäß zumindest einem der Ansprüche 1 bis 10 als Membrane in Brennstoffzellen.

38. Verwendung eines Verbundwerkstoffes gemäß zumindest einem der Ansprüche 1 bis 10 als Membran in der Elektrodialyse, der Membranelektrolyse oder der Elektrolyse.

39. Verwendung eines Verbundwerkstoffes gemäß zumindest einem der Ansprüche 1 bis 10 als Pervaporationsmembran.

40. Verwendung eines Verbundwerkstoffes gemäß zumindest einem der Ansprüche 1 bis 10 als Dampfpermeationsmembran.

## Claims

1. Permeable composite material having ion conducting properties based on at least one perforate and permeable support and having on at least one side of said support and in the interior of said support at least one inorganic component comprising essentially at least one compound of a metal, semimetal or mixed metal with at least one element from main groups 3 to 7,
selected from the oxides of the elements Sc, Y, Zr, Nb, Ce, V, Cr, Mo, W, Mn, Fe, Co, B, Al, In, Tl, Si, Ge, Sn, Pb and Bi,
produced in that,
at least one suspension comprising at least one inorganic component of at least one compound of at least one metal, semimetal or mixed metal with at least one of the elements of main groups 3 to 7 is brought into and onto at least one perforate and permeable support and by heating at least once the suspension is solidified on and in said support material,
**characterized in that**,
in the microstructure of said composite material, at least one organic and/or inorganic material having ion conducting properties is present as an admixture,
and the internal and/or external surfaces of the particles present in said composite material are coated with a layer of an inorganic and/or organic material,
or, in the interparticulate volume of said composite material, at least one inorganic and/or organic material having ion conducting properties is present
and the material having ion conducting properties comprises ionic groups from the group consisting of sulfonic acid, phosphonic acid, carboxylic acid, tetra-organylammonium, tetra-organylphosphonium groups or mixtures of these groups,
or the organic, ion conducting material is at least one polymer, selected from sulfonated polytetrafluoroethylene, sulfonated polyvinylidene fluoride, aminolyzed polytetrafluoroethylene, aminolyzed polyvinylidene fluoride, sulfonated polysulfone, aminolyzed polysulfone, sulfonated polyetherimide, aminolyzed polyetherimide or a mixture thereof,
or the inorganic, ion conducting material is at least one compound selected from the group consisting of oxides, phosphates, phosphonates, sulfates, titanates, silicates, aluminosilicates or mixtures of these compounds of at least the element Zr, or a mixture of Zr and Li, and the composite material is ion conducting at a temperature of from -40°C to 200°C.

2. Composite material according to Claim 1,
**characterized in that** the layer has a thickness of from 0.0001 to 1 µm.

3. Composite material according to Claim 1,
**characterized in that** the layer has a thickness of from 0.001 to 0.05 µm.

4. Composite material according to Claim 1,
**characterized in that** at least one organic and/or inorganic material having ion conducting properties fills the interstices of said composite material.

5. Composite material according to Claim 1,
**characterized in that** said ionic groups are organic compounds attached chemically and/or physically to the inorganic particles.

6. Composite material according to Claim 5,
**characterized in that** said ionic groups are connected to the internal and/or external surface of the particles present in said composite material by way of aryl and/or alkyl chains.

7. Composite material according to Claim 1,
**characterized in that** inorganic, ion conducting materials present comprise at least one partially hydrolyzed compound from the group consisting of oxides, phosphates, phosphonates, sulfates, titanates, silicates, aluminosilicates or mixtures of these compounds of at least one of the elements Al, Zr, Li or a mixture of these elements.

8. Composite material according to at least one of Claims 1 or 7, **characterized in that** inorganic, ion conducting material present comprises at least one amorphous and/or crystalline compound, bearing groups some of which are not hydrolyzable, of at least one of the elements Zr or Al, or a mixture of these elements or compounds.

9. Composite material according to at least one of Claims 1 to 8, **characterized in that** the ion conducting composite material is flexible.

10. Composite material according to at least one of Claims 1 to 9, **characterized in that** the ion conducting composite material can be bent to a very small radius of 1 mm.

11. Process for producing a composite material according to at least one of Claims 1 to 10 having ion conducting properties based on at least one perforate and permeable support having on at least one side of said support and in the interior of said support at least one inorganic component essentially comprising at least one compound of a metal, semimetal or mixed metal with at least one element from main groups 3 to 7, **characterized in that** at least one suspension comprising at least one inorganic component of at least one compound of at least one metal, semimetal or mixed metal with at least one of the elements of main groups 3 to 7 is brought into and onto at least one perforate and permeable support and by heating at least once the suspension is solidified on or in said support material,
and **in that**
the ion conducting composite material is obtained by using a sol comprising at least one ion conducting material or at least one material which has ion conducting properties following further treatment for the production of the composite material.

12. Process according to Claim 11, **characterized in that** the composite material is obtained by using at least one polymer-bound Brönsted acid or Brönsted base for the production of the composite material.

13. Process according to at least one of Claims 11 and 12, **characterized in that** the ion conducting composite material is obtainable by using at least one sol which comprises polyelectrolyte solutions or polymer particles carrying fixed charges.

14. Process according to Claim 13, **characterized in that** the polyelectrolyte or the polymer carrying fixed charges has a melting or softening point of less than 500°C.

15. Process according to at least one of Claims 13 and 14, **characterized in that** the polyelectrolyte or the polymer carrying fixed charges is sulfonated polytetrafluoroethylene, sulfonated polyvinylidene fluoride, aminolyzed polytetrafluoroethylene, aminolyzed polyvinylidene fluoride, sulfonated polysulphone, aminolyzed polysulphone, sulfonated polyetherimide, aminolyzed polyetherimide or a mixture thereof.

16. Process according to at least one of Claims 13 to 15, **characterized in that** the proportion of the polyelectrolyte or of the polymer carrying fixed charges in the sol that is used is between 0.001% and 50.0%.

17. Process according to Claim 16, **characterized in that** the proportion of the polyelectrolyte or of the polymer carrying fixed charges in the sol that is used is between 0.01% and 25%.

18. Process according to at least one of Claims 13 to 17, **characterized in that** the polymer in the course of processing may undergo chemical and physical, or chemical or physical, changes.

19. Process according to at least one of Claims 11 to 18, **characterized in that** the ion conducting composite material is obtained by using a sol comprising at least one ion conducting material or at least one material which has ion conducting properties following further treatment for the production of the composite material.

20. Process according to Claim 19, **characterized in that** materials are added to the sol which lead to the formation of inorganic, ion conducting layers on the internal and/or external surfaces of the particles present in the composite material.

21. Process according to at least one of Claims 19 and 20, **characterized in that** the sol is obtained by hydrolyzing at least one metal compound, at least one semimetal compound or at least one mixed metal compound, or a combination of these compounds using a liquid, a gas and/or a solid.

22. Process according to Claim 21, **characterized in that** the liquid, gas and/or solid used for the hydrolysis is water, water vapour, ice, alcohol or acid, or a combination of these compounds.

23. Process according to at least one of Claims 21 and 22, **characterized in that** the compound to be hydrolyzed is added to alcohol and/or to an acid prior to the hydrolysis.

24. Process according to at least one of Claims 21 to 23, **characterized in that** at least one nitrate, chloride, carbonate or alkoxide of a metal or semimetal is hydrolyzed.

25. Process according to Claim 24, **characterized in that** said nitrate, chloride, carbonate or alkoxide is a compound of the elements Zr, V, Mn, W, Mo, Cr, Al, Si, Sn and/or Y.

26. Process according to at least one of Claims 19 to 25, **characterized in that** at least one water and/or alcohol soluble acid or base is added to the sol for producing the composite material.

27. Process according to Claim 26, **characterized in that** an acid or base of the elements Li, Na, Mg, K, Ca, Ba, V, Y, Zn, Cr, W, Mo, Zr, Mn, Al, Si, P or S is added.

28. Process according to at least one of Claims 19 to 27, **characterized in that** the sol comprises nonstoichiometric metal, semimetal or nonmetal oxides and/or hydroxides produced by changing the oxidation state of the corresponding element.

29. Process according to Claim 28, **characterized in that** the oxidation state is changed by reaction with organic compounds or inorganic compounds, or by electrochemical reactions.

30. Process according to at least one of Claims 28 and 29, **characterized in that** the oxidation state is changed by reaction with an alcohol, aldehyde, sugar, ether, olefin, peroxide or metal salt.

31. Process according to at least one of Claims 28 to 30, **characterized in that** compounds of the elements Cr, Mn, V, Sn, Fe, Mo, W or Pb change the oxidation state.

32. Process according to at least one of Claims 19 to 31, **characterized in that** substances are added to the sol which result in the formation of inorganic, ion conducting structures.

33. Process according to Claim 32, **characterized in that** zeolite particles and/or β-aluminosilicate particles are added to the sol.

34. Process according to at least one of Claims 32 and 33, **characterized in that** a compound to be hydrolyzed carries nonhydrolyzable groups in addition to hydrolyzable groups.

35. Process according to at least one of Claims 32 to 34, **characterized in that** a compound to be hydrolyzed is an alkyltrialkoxy or dialkyldialkoxy or trialkyl-alkoxy compound of silicon.

36. Use of a composite material according to at least one of Claims 1 to 10 as a catalyst for acid or base catalyzed reactions.

37. Use of a composite material according to at least one of Claims 1 to 10 as a membrane in fuel cells.

38. Use of a composite material according to at least one of Claims 1 to 10 as a membrane in electrodialysis, membrane electrolysis, or electrolysis.

39. Use of a composite material according to at least one of Claims 1 to 10 as a pervaporation membrane.

40. Use of a composite material according to at least one of Claims 1 to 10 as a vapour permeation membrane.

## Revendications

1. Matériau composite perméable aux substances, présentant des propriétés conductrices d'ions, à base d'au moins un support interrompu et perméable aux substances, qui présente, sur au moins une face du support et dans l'intérieur du support, au moins un composant inorganique, qui présente, pour l'essentiel, au moins un composé fait d'un métal, d'un métalloïde ou d'un métal mixte avec au moins un élément du 3ème au 7ème groupe principal,
sélectionné parmi les oxydes des éléments Sc, Y, Zr, Nb, Ce, V, Cr, Mo, W, Mn, Fe, Co, B, Al, In, Tl, Si, Ge, Sn, Pb et Bi,
fabriqué,
en ce que, dans et sur un support interrompu et perméable aux substances, on amène au moins une suspension, qui présente au moins un composant inorganique d'au moins un composé fait d'au moins un métal, d'un métalloïde ou d'un métal mixte avec au moins un élément du 3ème au 7ème groupe principal et en ce que l'on solidifie la suspension par au moins un échauffement à une reprise sur et dans le matériau support,
**caractérisé**
**en ce que**, dans le réseau du matériau composite, au moins un matériau inorganique et/ou organique, qui présente des propriétés conductrices d'ions, est contenu en tant qu'additif de mélange, et en ce que les surfaces internes et/ou externes de particules présentes dans le matériau composite sont revêtues d'une couche faite d'un matériau inorganique et/ou organique
ou en ce que, dans le volume de grain intermédiaire du matériau composite, au moins un matériau inorganique et/ou organique, qui présente des propriétés conductrices d'ions, est présent,
et
**en ce que** le matériau présentant des propriétés conductrices d'ions présente des groupements ioniques du groupe des groupements acide sulfonique, acide phosphonique, acide carbonique, tétra-organylammonium, tétra-organylphosphonium ou des mélanges de ces groupements,
ou
**en ce que** le matériau conducteur d'ions organique est au moins un polymère, sélectionné parmi le polytétrafluoroéthylène sulfoné, le fluorure de polyvinylidène sulfoné, le polytétrafluoroéthylène aminolysé, le fluorure de polyvinylidène aminolysé, le polysulfone sulfoné, le polysulfone aminolysé, le polyétherimide sulfoné, le polyétherimide aminolysé ou un mélange de ces derniers,
ou
**en ce que** le matériau conducteur d'ions inorganique est au moins un composé du groupe des oxydes, des phosphates, des phosphonates, des sulfates, des titanates, des silicates, des aluminosilicates ou de mélanges de ces composés d'au moins de l'élément Zr ou d'un mélange de Zr et Li et en ce que le matériau composite est conducteur d'ions à une température allant de -40 °C à 200 °C.

2. Matériau composite selon la revendication 1,
**caractérisé en ce que** la couche a une épaisseur de 0,0001 à 1 *µ*m.

3. Matériau composite selon la revendication 1,
**caractérisé en ce que** la couche a une épaisseur de 0,001 à 0,05 *µ*m.

4. Matériau composite selon la revendication 1,
**caractérisé en ce qu'**au moins un matériau inorganique et/ou organique, qui présente des propriétés conductrices d'ions, remplit les espaces intermédiaires du matériau composite.

5. Matériau composite selon la revendication 1,
**caractérisé en ce que** les groupements ioniques sont des composés organiques liés aux particules inorganiques par voie chimique et/ou physique.

6. Matériau composite selon la revendication 5,
**caractérisé en ce que** les groupements ioniques sont liés, par l'intermédiaire de chaînes aryles et/ou alkyles, aux surfaces internes et/ou externes des particules présentes dans le matériau composite.

7. Matériau composite selon la revendication 1,
**caractérisé en ce qu'**en tant que matériaux conducteurs d'ions inorganiques est présent au moins un composé partiellement hydrolysé venant du groupe des oxydes, des phosphates, des phosphonates, des sulfates, des titanates, des silicates, des aluminosilicates ou de mélanges de ces composés d'au moins un des éléments Al, Zr, Li ou d'un mélange de ces éléments.

8. Matériau composite selon au moins une des revendications 1 ou 7, **caractérisé en ce qu'**en tant que matériau conducteur d'ions inorganique est présent au moins un composé amorphe et/ou cristallin, portant des groupements partiellement non hydrolysables, d'au moins un des éléments Zr ou A1, ou d'un mélange de ces éléments ou de composés.

9. Matériau composite selon au moins une des revendications 1 à 8, **caractérisé en ce que** le matériau conducteur d'ions est souple.

10. Matériau composite selon au moins une des revendications 1 à 9, **caractérisé en ce que** le matériau composite conducteur d'ions peut être plié jusqu'à un rayon le plus petit de 1 mm.

11. Procédé en vue de la fabrication d'un matériau composite, selon au moins une des revendications 1 à 10, présentant des propriétés conductrices d'ions, à base d'au moins un support interrompu et perméable aux substances, qui présente, sur au moins une face du support et dans l'intérieur du support, au moins un composant inorganique, qui présente pour l'essentiel au moins un composé fait d'un métal, d'un métalloïde ou d'un métal mixte avec au moins un élément du 3ème au 7ème groupe principal, **caractérisé**
**en ce que**, dans et sur au moins un support interrompu et perméable aux substances, l'on amène au moins une suspension, qui présente au moins un composant inorganique d'au moins un composé fait d'au moins un métal, d'un métalloïde ou d'un métal mixte avec au moins un élément du 3ème au 7ème groupe principal et en ce que l'on solidifie la suspension par au moins un échauffement à une reprise sur et dans le matériau support,
et
**en ce que** le matériau composite conducteur d'ions est obtenu par utilisation d'un sol, qui présente au moins un matériau conducteur d'ions ou au moins un matériau, qui présente, après un traitement supplémentaire, des propriétés conductrices d'ions lors de la fabrication du matériau composite.

12. Procédé selon la revendication 11, **caractérisé en ce que** le matériau composite est obtenu par utilisation d'au moins un acide ou une base de Brönstedt lié polymère lors de la fabrication du matériau composite.

13. Procédé selon au moins une des revendications 11 ou 12, **caractérisé en ce que** le matériau composite conducteur d'ions peut être obtenu par utilisation d'au moins un sol qui comprend des particules polymères portant des charges solides ou des solutions de polyélectrolytes.

14. Procédé selon la revendication 13, **caractérisé en ce que** le polymère portant des charges solides ou le polyélectrolyte possède un point de fusion ou un point de ramollissement en dessous de 500°C.

15. Procédé selon au moins une des revendications 13 ou 14, **caractérisé en ce que** le polymère portant des charges solides ou le polyélectrolyte comprend un polytétrafluoroéthylène sulfoné, un fluorure de polyvinylidène sulfoné, un polytétrafluoroéthylène aminolysé, un fluorure de polyvinylidène aminolysé, un polysulfone sulfoné, un polysulfone aminolysé, un polyétherimide sulfoné, un polyétherimide aminolysé ou un mélange de ces derniers.

16. Procédé selon au moins une des revendications 13 à 15, **caractérisé en ce que** la proportion du polymère portant des charges solides ou du polyélectrolyte dans le sol utilisé se situe entre 0,001 % et 50,0 %.

17. Procédé selon la revendication 16, **caractérisé en ce que** la proportion du polymère portant des charges solides ou du polyélectrolyte dans le sol utilisé se situe entre 0,01 % et 25 %.

18. Procédé selon au moins une des revendications 13 à 17, **caractérisé en ce que** le polymère peut se modifier lors de la mise en oeuvre par voie chimique et physique ou par voie chimique ou physique.

19. Procédé selon au moins une des revendications 11 à 18, **caractérisé en ce que** le matériau composite conducteur d'ions est obtenu, lors de la fabrication du matériau composite, par utilisation d'un sol, qui présente au moins un matériau conducteur d'ions ou au moins un matériau, qui présente, après un traitement supplémentaire, des propriétés conductrices d'ions.

20. Procédé selon la revendication 19, **caractérisé en ce que** l'on ajoute au sol des matériaux, qui conduisent à la formation de couches conductrices d'ions inorganiques sur les surfaces internes et/ou externes des particules contenus dans le matériau composite.

21. Procédé selon au moins une des revendications 19 ou 20, **caractérisé en ce que** le sol est obtenu par hydrolyse d'au moins un composé métallique, d'au moins un composé métalloïdique ou d'au moins un composé métallique mixte ou d'une combinaison de ces composés avec un liquide, un gaz et/ou un solide.

22. Procédé selon la revendication 21, **caractérisé en ce qu'**en tant que liquide, gaz et/ou solide en vue de l'hydrolyse, on utilise de l'eau, de la vapeur d'eau, de la glace, de l'alcool ou un acide ou une combinaison de ces composés.

23. Procédé selon au moins une des revendications 21 ou 22, **caractérisé en ce que** le composé à hydrolyser est introduit avant l'hydrolyse dans un alcool et/ou dans un acide.

24. Procédé selon au moins une des revendications 21 à 23, **caractérisé en ce qu'**au moins un nitrate, un chlorure, un carbonate ou un alcoolate d'un métal ou d'un métalloïde est hydrolysé.

25. Procédé selon la revendication 24, **caractérisé en ce que** le nitrate, le chlorure, le carbonate ou l'alcoolate est un composé des éléments Zr, V, Mn, W, Mo, Cr, Al, Si, Sn et/ou Y.

26. Procédé selon au moins une des revendications 19 à 25, **caractérisé en ce que** l'on ajoute au sol, en vue de la fabrication du matériau composite, au moins un acide et/ou une base soluble dans l'alcool et/ou dans l'eau.

27. Procédé selon la revendication 26, **caractérisé en ce que** l'on ajoute un acide ou une base des éléments Li, Na, Mg, K, Ca, Ba, V, Y, Zn, Cr, W, Mo, Zr, Mn, Al, Si, P ou S.

28. Procédé selon au moins une des revendications 19 à 27, **caractérisé en ce que** le sol comprend des oxydes, respectivement des hydroxydes, métalliques, métalloïdiques ou non métalliques non stoechiométriques, qui ont été produits par modification de l'état d'oxydation de l'élément correspondant.

29. Procédé selon la revendication 28, **caractérisé en ce que** la modification de l'état d'oxydation se fait par réaction avec des composés organiques ou des composés inorganiques ou par l'intermédiaire de réactions électrochimiques.

30. Procédé selon au moins une des revendications 28 ou 29, **caractérisé en ce que** la modification de l'état d'oxydation se fait par réaction avec un alcool, un aldéhyde, un sucre, un éther, une oléfine, un peroxyde ou un sel métallique.

31. Procédé selon au moins une des revendications 28 à 30, **caractérisé en ce que** les composés des éléments Cr, Mn, V, Sn, Fe, Mo, W ou Pb changent d'état d'oxydation.

32. Procédé selon au moins une des revendications 19 à 31, **caractérisé en ce que** l'on ajoute au sol des substances qui conduisent à la formation de structures inorganiques conductrices d'ions.

33. Procédé selon la revendication 32, **caractérisé en ce que** l'on ajoute au sol des particules de zéolite et/ou de β-aluminosilicate.

34. Procédé selon au moins une des revendications 32 ou 33, **caractérisé en ce qu'**un composé à hydrolyser porte, outre les groupements hydrolysables, des groupements non hydrolysables.

35. Procédé selon au moins une des revendications 32 à 34, **caractérisé en ce qu'**un composé à hydrolyser est un composé alkyltrialkoxy ou dialkyldialkoxy ou trialkylalkoxy du silicium.

36. Utilisation d'un matériau composite selon au moins une des revendications 1 à 10 en tant que catalyseur pour des réactions catalysées par voie acide ou basique.

37. Utilisation d'un matériau composite selon au moins une des revendications 1 à 10, en tant que membrane dans des piles à combustible.

38. Utilisation d'un matériau composite selon au moins une des revendications 1 à 10, en tant que membrane dans l'électrodialyse, l'électrolyse à membranes ou l'électrolyse.

39. Utilisation d'un matériau composite selon au moins une des revendications 1 à 10 en tant que membrane de pervaporation.

40. Utilisation d'un matériau composite selon au moins une des revendications 1 à 10 en tant que membrane de perméation à la vapeur.
